**Europäisches Patentamt**

**European Patent Office**

**Office européen des brevets**

(11) Veröffentlichungsnummer: **0 087 554**
**B1**

(12) **EUROPÄISCHE PATENTSCHRIFT**

(45) Veröffentlichungstag der Patentschrift:
02.05.85

(51) Int. Cl.⁴: **F 24 D 3/00**

(21) Anmeldenummer: **83100135.9**

(22) Anmeldetag: **10.01.83**

(54) **Einrichtung zur Bodenheizung bzw. -kühlung für Räume mit Schwingboden.**

(30) Priorität: **21.01.82 CH 392/82**

(43) Veröffentlichungstag der Anmeldung:
**07.09.83 Patentblatt 83/36**

(45) Bekanntmachung des Hinweises auf die Patenterteilung:
**02.05.85 Patentblatt 85/18**

(84) Benannte Vertragsstaaten:
**AT BE DE FR NL**

(56) Entgegenhaltungen:
**AT - B - 177 239**
**AT - B - 237 251**
**DE - A - 2 846 611**
**DE - C - 952 128**
**DE - C - 1 255 900**
**FR - A - 1 306 680**

(73) Patentinhaber: **Derla-Destra AG für Strahlungswärme, Höhestrasse 40 Postfach, CH-8702 Zollikon-Dorf (CH)**

(72) Erfinder: **Pfister, Jürg, Im Grossacher 6, CH-8123 Ebmatingen (CH)**

(74) Vertreter: **Sax, Walter F., Rauchackerstrasse 28, CH-8102 Oberengstringen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Einrichtung zur Bodenheizung bzw. -kühlung für Räume mit Schwingboden, mit im Hohlraum zwischen einer tragenden Decke und einem Blindboden angeordneten Heiz- bzw. Kühlrohren und auf diesen aufgesetzten, seitwärts gerichtete Flügel aufweisenden Wärmeübertragungslamellen.

Zur Erwärmung oder Abkühlung von Räumen mit Schwingboden, insbesondere Turn- und Sporthallen, bedient man sich vornehmlich der Bodenheizung bzw. -kühlung. Weit verbreitet sind flächenelastische Schwingbodenkonstruktionen nach dem beispielsweise in der DE-C Nr. 1 255 900 beschriebenen Prinzip, verbunden mit einer Einrichtung zur Bodenheizung bzw. -kühlung, wie sie z.B. in der AT-B Nr. 237 251 beschrieben ist. Dabei sind die Heiz- bzw. Kühlrohre und die Wärmeübertragungslamellen so angeordnet, dass sich die Lamellenflügel, von den tiefer liegenden Rohren ausgehend, im Bogen nach oben erstrecken und federnd an der Unterseite des Blindbodens anliegen.

Beim Verlegen des Blindbodens auf dem aus biegeelastischen Trägern bestehenden Unterbau sind besondere Vorsichtsmassnahmen zu treffen, damit nicht durch Betreten der Wärmeübertragungslamellen die vor dem Abdecken noch hochstehenden Lamellenflügel verformt oder beschädigt werden. Wenn vor dem Verlegen des Blindbodens sämtliche Wärmeübertragungslamellen aufgebracht worden sind, dann muss die gesamte Bodenheizfläche mit Schalltafeln abgedeckt werden, und es dürfen immer nur so viele Schalltafeln entfernt werden, als für das Verlegen des Blindbodens notwendig ist. Werden andererseits die Wärmeübertragungslamellen erst beim Verlegen des Blindbodens aufgebracht, so dürfen jeweils nur so viele Lamellen aufgebracht werden, als vom nächsten verlegten Brett des Blindbodens abgedeckt werden, damit ein Betreten der Lamellen vermieden wird. Aus diesem Grund gestalten sich die Montagearbeiten sehr umständlich und zeitraubend.

Zur Einsparung von Energie ist man bestrebt, die Intensität der Raumheizung von der Benützung des Raumes abhängig zu machen. Beispielsweise soll in nicht dauernd belegten Turn- und Sporthallen die Heizleistung in den Belegungspausen herabgesetzt werden. Während bei einem programmierten Betrieb solcher Einrichtungen eine Leistungsregelung noch mit verhältnismässig einfachen Mitteln möglich ist, kann bei unregelmässiger und unter Umständen sich kurzfristig ändernder Raumbelegung eine an die Raumbenützung angepasste Wärmeregelung mit bekannten Mitteln gewöhnlich nicht ohne grossen Aufwand verwirklicht werden.

Die Erfindung bezweckt nun die Schaffung einer Bodenheiz- bzw. -kühleinrichtung der eingangs genannten Art, welche unter Vermeidung der beschriebenen Nachteile nicht nur eine einfachere Montage, sondern zugleich eine selbsttätige Wärmeregulierung in Abhängigkeit von der Raumbenützung ermöglicht.

Die Erfindung besteht darin, dass die Lamellenflügel wenigstens annähernd horizontal so dicht unterhalb des Blindbodens verlaufen, dass bei ruhendem Blindboden die Konvektionsströmungen im Zwischenraum minimal sind, die Lamellenflügel aber bei der maximal zulässigen Durchbiegung des Blindbodens von diesem nicht berührt werden.

Dadurch, dass die Flügel der Wärmeübertragungslamellen keine Vorspannung aufweisen und deshalb im montierten Zustand nicht aus der Ebene des zu verlegenden Blindbodens herausragen, können sie die Belagsarbeiten nicht behindern, und die Gefahr einer Verformung oder Beschädigung der Wärmeübertragungslamellen durch Betreten ist erheblich vermindert.

Einen besonderen Vorteil der erfindungsgemässen Anordnung stellt die erzielbare selbsttätige Wärmeregulierung dar. Im Ruhezustand des Schwingbodens erfolgt beim Heizbetrieb der Wärmeübergang von den Lamellenflügeln zum Blindboden praktisch ausschliesslich durch Wärmestrahlung. Im Zwischenraum zwischen jedem Lamellenflügel und dem Blindboden befindet sich ein stehendes Luftpolster. Wegen des geringen Abstandes findet in diesem Bereich praktisch jedoch keine Luftbewegung, also auch kein Wärmeübergang durch Konvektion statt. Sobald aber der Schwingboden bei Benützung des Raumes in Schwingungen gerät und sich dabei der Blindboden abwechselnd senkt und hebt, ändert sich dessen Abstand von den Lamellenflügeln periodisch. Dadurch entsteht eine Luftströmung im Zwischenraum parallel zur Unterseite des Blindbodens, was zur Folge hat, dass nunmehr zusätzlich Wärme durch Konvektion übertragen wird. Durch den auf diese Weise intensivierten Wärmeübergang erhöht sich der Wärmeentzug aus der Heizeinrichtung, was bei konstant gehaltener Vorlauftemperatur des Wärmemediums zu einer Erniedrigung der Rücklauftemperatur und damit automatisch zu einer Erhöhung der Heizleistung führt. Umgekehrt wird beim Übergang des Schwingbodens in den Ruhestand die Heizleistung selbsttätig wieder herabgesetzt. Entsprechende Verhältnisse liegen vor bei Kühlbetrieb. Die Heizleistung wird also selbsttätig dem jeweiligen Wärmebedarf angepasst, ohne dass hierzu besondere Steuermittel oder zusätzliche Manipulationen am Heizungssystem erforderlich wären. Damit lässt sich beim Heizen oder Kühlen von Räumen mit Schwingboden in Belegungspausen Energie einsparen.

Es ist zwar z.B. aus der DE-C Nr. 952 128 und aus der AT-B Nr. 177 239 bekannt, die Lamellenflügel von Wärmeübertragungslamellen freitragend bzw. mit Abstand von der Wärmeaufnahmefläche anzuordnen. Damit soll einerseits eine gleichmässigere Wärmeverteilung und andererseits eine bessere Trittschallisolation erzielt werden. Anhaltspunkte für die erfindungsgemässe Lösung und die damit beabsichtigte Wirkung enthalten diese Veröffentlichungen dagegen nicht.

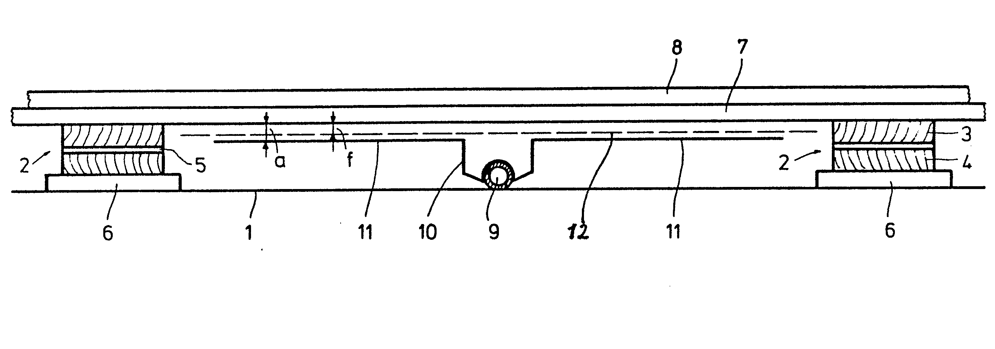

In der Zeichnung ist ein Ausführungsbeispiel der Erfindung dargestellt. Sie zeigt in einem Vertikalschnitt einen Abschnitt eines mit der erfindungsgemässen Heiz- bzw. Kühleinrichtung ausgerüsteten Schwingbodens.

Auf der Oberseite 1 einer tragenden Decke sind zur Bildung des Schwingbodens in gleichmässigen Abständen biegeelastische Träger 2 parallel nebeneinander angeordnet. Jeder Träger 2 besteht aus zwei übereinander angeordneten Brettern 3 und 4, die in regelmässigen Abständen durch Zwischenlagen 5 miteinander kraftschlüssig verbunden sind. Die Träger sind auf vorzugsweise nachgiebigen Klötzen 6 abgestützt, welche in regelmässigen Abständen längs der Träger auf der Oberseite 1 der tragenden Decke plaziert sind. Auf den Trägern 2 ruht der z.B. aus Brettern oder Platten bestehende Blindboden 7, der den Bodenbelag 8 trägt.

Im Hohlraum zwischen der tragenden Decke und dem Blindboden 7 sind die Heiz- bzw. Kühlrohre mit den aufgesetzten Wärmeübertragungslamellen angeordnet. In der Zeichnung ist ein Heiz- bzw. Kühlrohr 9 mit einer Wärmeübertragungslamelle 10 zu sehen. Die seitwärts gerichteten Lamellenflügel 11 liegen in einer Horizontalebene mit zum Blindboden 7 möglichst geringem Abstand a, der jedoch etwas grösser ist als die maximal zulässige Durchbiegung f des Blindbodens 7, damit dieser auch in seiner tiefsten, durch die gestrichelte Linie 12 angedeuteten Lage die Lamellenflügel 11 nicht berührt.

Die üblicherweise bei einer solchen Bodenkonstruktion vorhandenen Mittel zur Wärme- und Feuchtigkeitsisolation sind in der Zeichnung nicht dargestellt. Der Hohlraum unterhalb der Lamellenflügel 11 ist vorzugsweise mit Isoliermaterial ausgefüllt, um die Wärmeabgabe nach unten zu dämmen. Zu diesem Zweck können in bekannter Weise auch Formteile aus Isoliermaterial verwendet werden.

Da die Lamellenflügel bei Heizbetrieb in Rohrnähe wärmer sind als an ihren Enden, können sie in Rohrnähe einen etwas grösseren Abstand vom Blindboden haben als an ihren Enden, also vom Rohr her leicht schräg nach oben verlaufen, um einen gewissen Temperaturausgleich an der Unterseite des Blindbodens zu erzielen.

Im Gegensatz zu bekannten Lösungen mit am Blindboden mit Druck anliegenden Lamellenflügeln wird bei der erfindungsgemässen Einrichtung das Schwingverhalten des Schwingbodens durch die berührungsfrei angeordneten Lamellenflügel nicht beeinflusst.

Die erfindungsgemässe Anordnung der Heiz- bzw. Kühleinrichtung ist bei jeder bekannten Konstruktion von Schwingböden anwendbar.

## Patentanspruch

Einrichtung zur Bodenheizung bzw. -kühlung für Räume mit Schwingboden, mit im Hohlraum zwischen einer tragenden Decke und einem Blindboden (7) angeordneten Heiz- bzw. Kühlrohren (9) und auf diesen aufgesetzten, seitwärts gerichtete Flügel (11) aufweisenden Wärmeübertragungslamellen, dadurch gekennzeichnet, dass die Lamellenflügel (11) wenigstens annähernd horizontal so dicht unterhalb des Blindbodens (7) verlaufen, dass bei ruhendem Blindboden die Konvektionsströmungen im Zwischenraum (a) minimal sind, die Lamellenflügel aber bei der maximal zulässigen Durchbiegung (f) des Blindbodens von diesem nicht berührt werden.

## Claim

Device for heating, respectively cooling the floor for rooms having a floating floor, with heating, respectively cooling tubes disposed in the space between a supporting ceiling and a counterfloor and with heat-convecting lamellae placed upon said tubes and equipped with fins extending laterally, characterized in that the lamella fins (11) extend at least substantially horizontally within such a small distance below the counterfloor (7) that the convection currents in the space (a) are at a minimum when the floor is at rest, but that the lamella fins will not be contacted by the counterfloor during its utmost admissible deflection (f).

## Revendication

Dispositif de chauffage ou de refroidissement par le sol pour locaux à plancher flottant, comprenant des tuyaux de chauffage ou de refroidissement, installés dans l'espace vide entre un plancher portant et un faux plancher, ou plancher flottant, sur lesquels sont montées des lamelles de transmission de chaleur pourvues d'ailes dirigées vers les côtés, caractérisé en ce que les ailes (11) des lamelles sont disposées, au moins à peu près horizontalement, à si faible distance sous le plancher flottant (7) que les courants de convection dans l'intervalle (a) entre les ailes (11) et le plancher sont minimaux quand le plancher est au repos, mais sans que le plancher flottant touche les ailes des lamelles quand il présente la flèche maximale admissible (f).